# EUROPEAN PATENT APPLICATION

(11) **EP 2 279 943 A1**
(43) Date of publication of application: **02.02.2011**
(21) Application number: 08873997.4
(22) Date of filing: 21.04.2008
(51) Int. Cl.: B64C 27/02, B64C 27/48, B64C 29/00, B64C 11/04

(54) **VERTICAL TAKE-OFF AND VERTICAL LANDING GYROPLANE**

(71) Applicant: Polovinkin, Boris Andreevich, Novosibirskaya obl. 630501 (RU)
(72) Inventor: Polovinkin, Boris Andreevich, Novosibirskaya obl. 630501 (RU)
(74) Representative: Sloboshanin, Sergej
(86) International application number: PCT/RU2008/000240
(87) International publication number: WO 2009/131479

(57) **Abstract**

The proposed gyroplane comprises a fuselage 1 with a cockpit, with a foldable pylon mounted thereon, a rotor head 3 having a controllable torsion sleeve 16, and a pusher propeller 5 with a controllable pitch. In order to evenly distribute the load on the torsion sleeve 16 during prespinning of the rotor 4, the torsion bar in the rotor head 3 is made of non-bending flat composite plates. In order to reduce control stick vibration during flight, the plane of attachment of a pivot joint 15 of the torsion sleeve 16 is offset at an angle of not more than 40 degrees from the longitudinal axis of the torsion sleeve 16 of the rotor 4. In order to reduce the load applied to the control stick during gyroplane in-flight control, the rotor head 3 is attached to the pylon via a frame joint 9 with a forwardly offset pitch axis. In order to establish a favourable engine mode during flight, the pusher propeller 5 is provided with the controllable torsion sleeve 16 made of composite plates. The propeller 5 with the controllable pitch can be used in a pusher as well as in a tractor configuration and can be used in any aircraft.

## Description

### Technical field

The invention relates to aviation technology, particularly to the manufacturing and usage of gyroplanes.

A multitude of gyroplanes is known which have been constructed in recent time. A gyroplane is known which is described in the applications WO 1997/008050 (International Class B64C 27/02, published March 6^{th}, 1997), WO 1998/030446 (International Class B64C 11/06, July 16^{th}, 1998). The principle of changing the pitch of the rotor and the pusher propeller of these gyroplane constructions lies in the manufacturing of special hollow blades within which long torsion bars are arranged. The gyroplane described in these applications allows to carry out a vertical take-off and a vertical landing by changing the rotor pitch. The blades of the pusher propeller with the changeable pitch are made according to the same principle as the rotor blades.

Its shortcoming is the special labour-intensive technology of manufacturing the blades and torsion bars, which does not allow to use the classic technology of manufacturing blades in aviation.

A gyroplane according to the patent RU 2 313 473 C1 is known (International Class B64C 27/02, published December 27^{th}, 2007), in which a changeable pitch rotor head with a torsion sleeve is used. The shortcoming of this construction is that the pivot joint has milling edges at an angle of 2-3 degrees to the plane, as a result of which the fiberglass laminate torsion bar attached to the pivot joint has an angle of 4-6 degrees. During prespinning of the rotor this angle is reduced to 0 due to centrifugal forces, while the upper fiberglass laminate plates of the torsion bar undergo an additional tensile stress while the lower ones are compressed, which is a shortcoming of this construction and can lead to a break of the torsion bar during start-up of the rotor.

In order to reduce the load applied to the control stick during gyroplane in-flight control, a frame joint is carried out symmetrically, and a deflector is attached to the head fulfilling the function of a relief air compensator. This construction cannot effectively solve the problem of relieving the stress on the control stick during gyroplane in-flight control.

Therefore there is a need to develop a gyroplane with further perfection of the units, which is reliable during flight, easy to control and convenient in storage.

### Disclosure of the invention

The invention applied for is based on the task of creating a gyroplane with a changeable rotor pitch to enable vertical take-off and vertical landing, with a pusher propeller with a controllable pitch and with a foldable pylon for convenient storage and transport.

The task is solved by creating a gyroplane comprising a fuselage with a cockpit with a foldable pylon mounted thereon, with a rotor head having an controllable torsion sleeve, a power unit arranged behind the cockpit with a pusher propeller with a controllable pitch, a vertical tail unit with a rudder, and a chassis resting on three points.

In order to evenly distribute the load on the rotor torsion sleeve during rotor prespinning, the torsion bar in the rotor head is made of non-bended flat composite plates.

In order to reduce control stick vibration during flight, the plane of attachment of the pivot joint of the rotor torsion sleeve is offset at an angle of not more than 40 degrees from the longitudinal axis of the torsion bar.

Preferably the plane of attachment of the pivot joint of the rotor torsion sleeve is offset at an angle of 30 degrees from the longitudinal axis of the torsion bar.

According to another embodiment of the gyroplane, the plane of attachment of the pivot joint of the rotor torsion sleeve coincides with the longitudinal axis of the torsion bar.

In order to reduce the load applied to the control stick during gyroplane in-flight control, the rotor head is attached to the pylon via a frame joint with a forwardly offset pitch axis.

For convenient storage and transport of the gyroplane the rotor blades are removed, the pylon is folded into a horizontal position by an electrohydraulic drive without additional dismantling. To this end, all joint connections of the rotor head control rods and also the joint connection of the Hooke shafts for start-up of the rotor drive are arranged on the rotational axis of the pylon support.

The suggested rotor head can be used in gyroplanes of different constructions.

To establish a favourable engine operation mode during flight, the pusher propeller is provided with a controllable pitch. To this end, a hollow hub on which the torsion sleeve made of composite plates is arranged on a hollow flange of the reductor through which the pitch control rod runs. The entire mechanism with the changeable pitch is enclosed by a spinner of large diameter. On the ends of the sleeve trapezoidal blades are attached, cut according to the spinner profile. This construction of an air propeller with a controllable pitch can be used in a pusher as well as in a tractor configuration and can be used in any aircraft.

The technical result of the solution applied for is the creation of a gyroplane which is a safe, reliable and compact vertical take-off and vertical landing aircraft.

Hereinafter one of the possible configurations of the vertical take-off and vertical landing gyroplane is given.

### Short description of the drawings

Fig. 1 shows an overall view of the gyroplane applied for.
Fig. 2 shows the arrangement of the gyroplane control mechanisms.
Fig. 3 shows the details of the rotor head with the changeable pitch.
Fig. 4 shows the details of the pusher propeller with the controllable pitch.

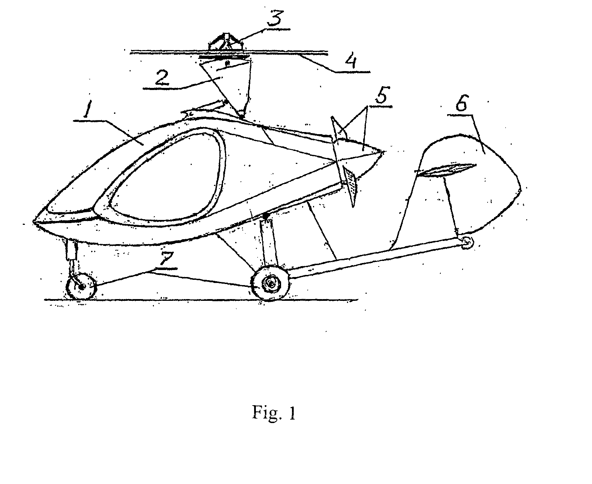

The gyroplane consists of a fuselage 1 (Fig. 1), a pylon support 2, a rotor head 3, a rotor 4, a pusher propeller 5, a tail unit 6, and a three-wheel chassis 7.

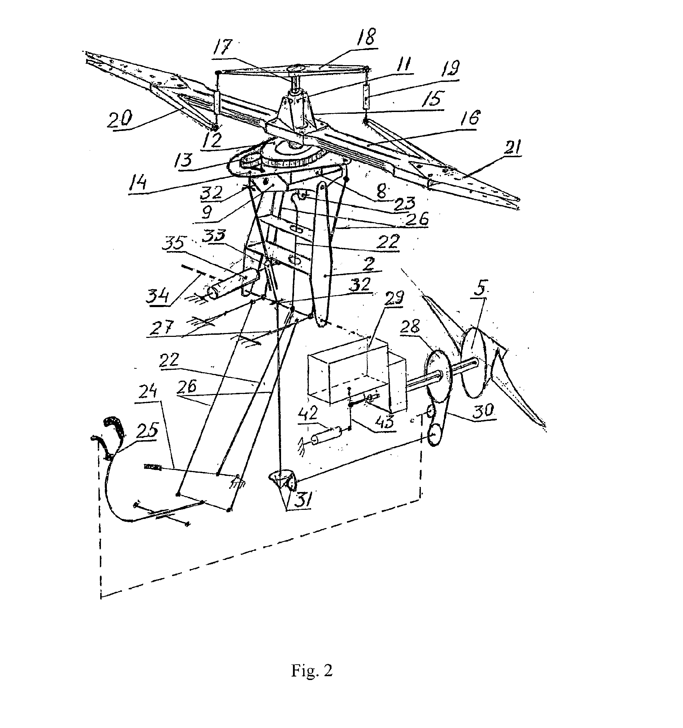

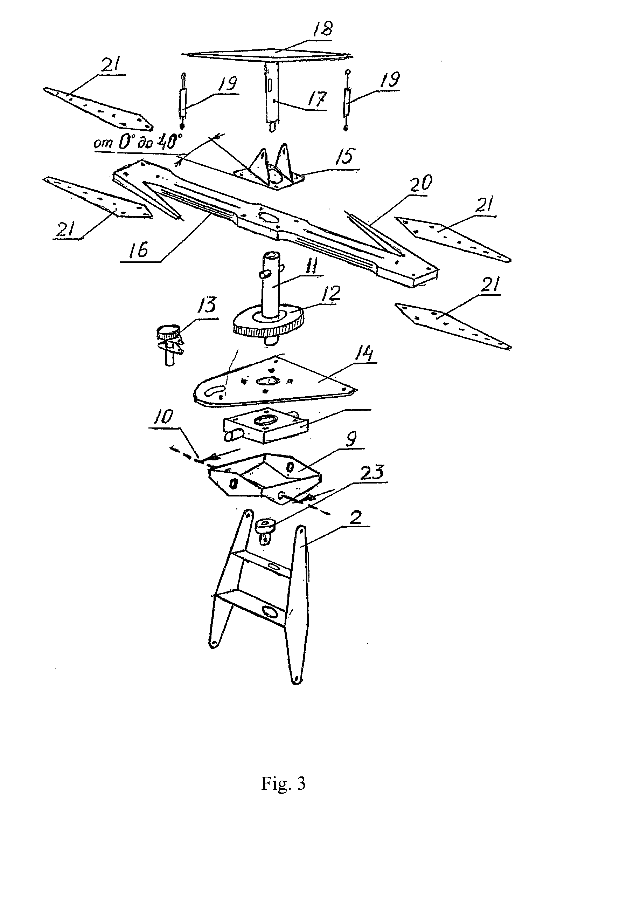

The rotor head 3 (Fig. 2) includes a housing 8 of the hub bearing attached to the pylon support 2 via a frame joint 9 having a forwardly offset pitch axis 10 (Fig. 3).

Into the bearing of the housing 8 a hollow shaft of the hub 11 is inserted, on the hub 11 a gear wheel 12 is arranged, either fixed or via a sleeve coupling depending on the construction of the drive.

The drive 13 for start-up of the rotor 4 is arranged on a slab 14.

The housing 8 of the hub bearing is attached to the slab 14.

On the shaft of the hub 11 a pivot joint 15 is arranged on which a torsion bar made of straight composite plates is attached.

The plane of attachment of the pivot joint 15 of the torsion sleeve 16 of the rotor 4 is offset at an angle of not more than 40 degrees from the longitudinal axis of the torsion bar, or the plane of attachment of the pivot joint 15 of the torsion sleeve 16 of the rotor 4 coincides with the longitudinal axis of the torsion bar (Fig. 3).

In the hollow hub 11 a shaft 17 is inserted on which a rocker 18 is mounted. The pivot joint 15 and the rocker shaft 17 are fixed on the hub 11 by an axle.

The ends of the rocker 18 are connected to levers 20 of the torsion sleeve 16 via rods 19.

The rotor blades are attached to the torsion sleeve 16 via plates 21. The shaft of the rocker 18 is connected to a pitch rod 22 via a bearing joint 23.

### Control of the blade pitch of the rotor 4

The force is transmitted from the control stick 24 (pitch-gas) via rods 22, via the bearing joint 23 and the plunger 17 to the rocker 18, and via the rods 19 it has an effect on the torsion sleeve 16 made of straight composite plates, thus changing the pitch of the rotor blades.

### Control of the angle of attack of the blades of the rotor 4

The force is transmitted from the gyroplane control stick 25 via rods 26 attached to pivot levers 27 to the slab 14 on which the housing 8 of the hub bearing, the shaft of the hub 11, and the pivot joint 15 with the torsion sleeve 16 are attached. Thus the angle of attack of the rotor 4 is changed in terms of pitching and rolling.

### Prespinning of the rotor 4

The torque is transmitted from a pulley 28 positioned on the shaft of the engine reductor 29 via a belt drive 30 with a tension roller to an angle reducer 31.

The torque is transmitted from the angle reducer 31 via a double Hooke joint 32 and a splined joint 33 to a drive 13 for prespinning the rotor 4.

### Turning of the pylon support 2 into a horizontal position

All connections of the control rods 26 of the rotor head 3 and the Hooke joint 32 of the shafts of the drive for start-up of the rotor 4 are positioned on the rotational axis 34 of the pylon support 2. This renders it possible to turn the pylon into a horizontal position by the electrohydraulic drive 35 without additional dismantling when the blades of the rotor 4 are removed.

### The pusher propeller 5 with the controllable pitch

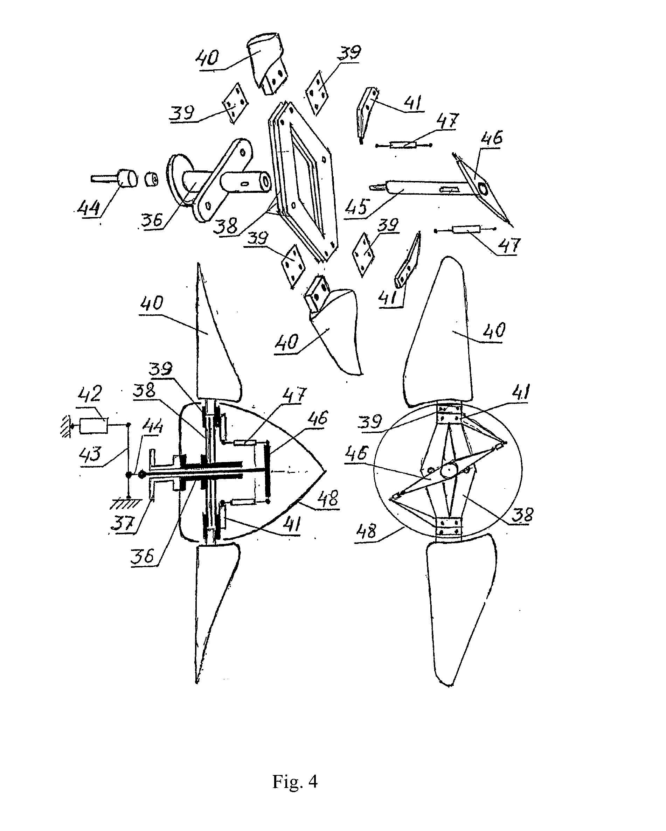

The pusher propeller 5 with the controllable pitch consists of a hollow hub 36 through which a rocker shaft 45 runs which is fixed by a pin (Fig. 4).

On the hub 36 a torsion sleeve 38 made of straight composite plates is arranged.

On the ends of the torsion sleeve 38 the blades 40 and the pitch control levers 41 are attached via a fixation 39. The entire mechanism is enclosed by a spinner 48 of large diameter.

The force is transmitted from the electric drive 42 to a shaft 45 and a rocker 46 via a lever 43 via a bearing joint 44. From the rocker 46 the force is transmitted via rods 47 to levers 41 and to the torsion sleeve 38 of the pusher propeller 5. Thus the pitch of the blades 40 of the pusher propeller 5 is changed.

### The gyroplane works as follows.

The engine 29 is started. By the pitch-gas control stick 24 the blades of the rotor 4 are guided to a zero angle of attack, whereafter by the belt drive 30 with the tension roller a start-up of the rotor 4 is carried out up to rotations that exceed the in-flight rotations 1.5-fold, while the brakes of the gyroplane remain applied. The collective pitch control system of the blades of the rotor 4 allows three fixed positions on the pitch-gas stick with respect to the angle of rotor blade position: with a zero, controllable (flight) and landing angle of attack.

After the rotor 4 has reached rotations of 450-500 rpm, the start-up of the rotor 4 is stopped. With the pitch-gas stick 24 the angle of attack of the blades of the rotor 4 is set to "flight" and gas is added. As a result, a load is applied to the rotor 4.

The gyroplane takes off vertically and begins to advance, wherein the rotations of the rotor 4 fall to "flight", and the rotor 4 already rotates from the incoming air stream. Subsequently the gyroplane is controlled like an airplane. Before the landing of the gyroplane gas is removed, and the gyroplane, hovering over the landing place, begins to descend (to parachute). At 1-2 m from the ground, depending on the mass of the blades of the rotor 4, the angle of attack of the rotor blades is increased by the pitch-gas control stick 24, i.e. it is changed to a landing angle. The parachuting speed of the gyroplane is reduced significantly, and a soft landing is made.

On the gyroplane a pusher propeller 5 with a controllable pitch is arranged. During a scheduled flight or a flight at increased speeds, the angle of attack of the blades 40 of the pusher propeller 5, which are attached to the ends of the torsion sleeve 38, is increased by the electric drive 42. Thus a favourable engine operation mode is created.

For convenient storage of the gyroplane and for transport in a trailer, it is sufficient to remove the blades of the rotor 4 and to lower the pylon into a horizontal position with the help of the electrohydraulic drive 35, without any additional dismantling.

### Best embodiment of the invention

The above-described gyroplane is the best embodiment of the invention and is shown in Fig. 1, Fig. 2, Fig. 3 and Fig. 4.

The gyroplane according to this embodiment of the invention comprises a fuselage with a foldable pylon mounted thereon, with a rotor head having a controllable torsion sleeve, and a pusher propeller with a controllable pitch.

In order to evenly distribute the load on the torsion sleeve 16 of the rotor 4 during prespinning of the rotor 4, the torsion bar is made of non-bended flat composite plates.

In order to reduce control stick vibration during flight, the plane of attachment of the pivot joint 15 of the torsion sleeve 16 of the rotor 4 is offset at an angle of 30 degrees from the longitudinal axis of the torsion bar (Fig. 3).

In order to reduce the load applied to the gyroplane control stick during flight, the axis 10 of the frame joint 9 is forwardly offset.

For convenient storage and transport in a trailer, the pylon is foldable.

For a choice of a favourable engine mode during flight, the pusher propeller 5 (Fig. 4) is provided with a controllable pitch.

### Industrial applicability

The invention is used in the manufacturing of rotary-wing aircraft, in particular vertical take-off and vertical landing gyroplanes.

The rotor head can be used in gyroplanes of other constructions. The pusher propeller with the controllable pitch can be used in a pusher as well as in a tractor configuration in any aircraft.

## Claims

1. Vertical take-off and vertical landing gyroplane comprising a fuselage with a pylon with a rotor head mounted thereon, which is attached to the pylon by a frame joint and has a torsion sleeve consisting of a pivot joint and a torsion bar made of composite plates, a power unit with a pusher propeller with a controllable pitch, wherein the power unit is arranged behind the cockpit, a vertical tail unit with a rudder, and a chassis resting on three points, **characterised in that** the torsion bar of the rotor sleeve is made of non-bended flat composite plates, the rotor blades are arranged at the ends of the torsion bar, the plane of attachment of the pivot joint of the rotor torsion sleeve is offset at an angle of not more than 40 degrees from the longitudinal axis of the torsion bar, or the plane of attachment of the pivot joint of the rotor torsion sleeve coincides with the longitudinal axis of the torsion bar, the rotor head is attached to the pylon via a frame joint with a forwardly offset pitch axis, for folding the pylon into a horizontal position all joint connection rods for controlling the rotor head inclination and the joint connection of the Hooke shafts for start-up of the rotor drive are arranged on the pivot axis of the pylon support, the pusher propeller with the controllable pitch has a controllable torsion sleeve made of composite plates and mounted on a hollow hub, the blades cut according to the spinner profile are attached at the ends of the torsion sleeve.

2. Gyroplane according to claim 1, **characterised in that** the plane of attachment of the pivot joint of the rotor torsion sleeve is offset at an angle of 30 degrees from the longitudinal axis of the torsion bar.

3. Gyroplane rotor head attached to a pylon via a frame joint and comprising a torsion sleeve consisting of a pivot joint and a torsion bar made of composite plates, **characterised in that** the rotor torsion sleeve is made of non-bended flat composite plates, the plane of attachment of the pivot joint of the rotor torsion sleeve is offset at an angle of not more than 40 degrees from the longitudinal axis of the torsion bar, or the plane of attachment of the pivot joint of the rotor torsion sleeve coincides with the longitudinal axis of the torsion bar, the rotor head is attached to the pylon via a frame joint with a forwardly offset pitch axis.

4. Rotor head according to claim 3, **characterised in that** the plane of attachment of the pivot joint of the rotor torsion sleeve is offset at an angle of 30 degrees from the longitudinal axis of the torsion bar.

5. Propeller with a controllable pitch, **characterised in that** the propeller has a controllable torsion sleeve made of composite plates and arranged on a hollow hub, the blades cut according to the spinner profile are attached at the ends of the torsion sleeve.
